# EUROPÄISCHE PATENTSCHRIFT

(11) **EP 0 894 293 B1**
(45) Veröffentlichungstag und Bekanntmachung des Hinweises auf die Patenterteilung: **05.07.2000**
(21) Anmeldenummer: 97922908.5
(22) Anmeldetag: 17.04.1997
(51) Int. Cl.: G05B 11/16, F16H 61/02

(54) **DIGITALER ZWEIPUNKTREGLER FÜR EIN AKTUATORELEMENT**
DIGITAL TWO-STEP CONTROLLER FOR AN ACTUATOR ELEMENT
REGULATEUR NUMERIQUE A DEUX POSITIONS POUR UN ELEMENT D'ACTIONNEUR

(30) Priorität: 19.04.1996 DE 19615519
(43) Veröffentlichungstag der Anmeldung: 03.02.1999
(73) Patentinhaber: Voith Turbo GmbH & Co. KG, 89522 Heidenheim (DE)
(72) Erfinder: DIETZEL, Bernd, D-89428 Syrgenstein (DE); BEK, Manfred, D-89520 Heidenheim (DE)
(74) Vertreter: Dr. Weitzel & Partner
(86) Internationale Anmeldenummer: EP9701935
(87) Internationale Veröffentlichungsnummer: WO9740427

(56) Entgegenhaltungen:
- DE-A- 3 225 254
- DE-A- 3 607 329
- DE-C- 4 012 577
- US-A- 4 855 913
- US-A- 5 251 091
- US-A- 5 461 563
- PATENT ABSTRACTS OF JAPAN vol. 095, no. 007, 31.August 1995 & JP 07 091530 A (TOYOTA MOTOR CORP;OTHERS: 01), 4.April 1995,

## Beschreibung

Bei Getrieben mit hydraulischen und mechanischen Gängen, insbesondere Nutzfahrzeuggetrieben, ist es wünschenswert, je nach Vorwahl der zugehörigen Fahrstufen in Abhängigkeit von Fahrgeschwindigkeit und Motorbelastung das Getriebe so zu steuern, daß stets eine optimale Motorauslastung und Zugkraftanpassung auch bei sehr unterschiedlichen Fahrbedingungen gewährleistet ist. Des weiteren sollen alle vorkommenden Schaltungen unter Last stoßfrei vor sich gehen, unabhängig von der Art des eingesetzten Motors und der gegebenen Ausgleichsgetriebe. Diese Anforderungen an eine Getriebesteuerung werden am besten durch ein elektronisch-hydraulisches Steuerungssystem gelöst, dessen Funktionsweise beispielsweise in dem Fachbuch "Hydrodynamik in der Antriebstechnik, herausgegeben von der J. M. Voith GmbH, Vereinte Fachverlage Krausskopf-Ingenieur Digest, Mainz, 1987" beschrieben ist.

Die Elektronik und Hydraulik des obengenannten elektrisch-hydraulischen Steuerungssystems wurde über Magnetventile, die aus Magnetspule, Steuerkolben und Rückstellfeder bestehen, miteinander verknüpft. Zur Steuerung der Magnetventile wurden bislang als Regler entweder stetige Regler, die hardwaremäßig verschaltet sein konnten oder als Softwarelösung ausgeführt waren, eingesetzt. Eine gegenüber den stetigen Reglern erhebliche Vereinfachung bei Automatikgetriebesteuerungen konnte dadurch erreicht werden, daß ein diskreter Zweipunktregler (siehe hierzu auch Dubbel, Taschenbuch für den Maschinenbau, Springerverlag, Berlin, Heidelberg, New York, 1995, Seiten X8 bis X9) verwendet wurden. Gemäß dem Stand der Technik waren diese Regler in einer Hardwareschaltung realisiert, wobei Komparatoren, beispielsweise in Form von beschalteten Operationsverstärkern, Verwendung fanden. Die hardwaremäßigen Schaltungen wurden als kundenspezifische integrierte Schaltkreise (ASIC) ausgeführt. Die Einstellung der für das stabile Arbeiten eines digitalen Zweipunktreglers notwendigen Hysterese (siehe auch Dubbel, aao, Seite X8) wurden in diesen Schaltungen dadurch eingestellt, daß Widerstände in die Schaltungsanordnung eingebracht wurden. In einem zeitintensiven Abgleichvorgang mußten diese Widerstände für jede Getriebesteuerung nach deren Fertigung eingestellt werden. Dies erforderte u.a. beispielsweise das Durchmessen der Steuerung und das manuelle Einlöten von Abgleichwiderständen.

Des weiteren war jedem Istwerteingang ein Stellausgang durch die Hardware fest zugeordnet. Diese starre Zuordnung hat es nicht zugelassen, mit ein und demselben Regler zwei Magnetventile steuern zu können.

Aus der US-A-4 855 913 ist ein elektronisches Steuersystem für ein Schaltgetriebe mit mindestens einem Aktuator bekanntgeworden, wobei die Steuereinrichtung eine Vielzahl von Aktuatoren in Abhängigkeit von Schaltvorgaben ansteuert, um die Kupplung entsprechend ein- bzw. auszurücken.

Die US-A-5 251 091 zeigt ebenfalls ein Schaltgetriebe mit einer Steuereinrichtung. Die Steuereinrichtung zeichnet sich dadurch aus, daß Mittel zur präzisen Einstellung des den Aktuatoren zugeführten Stromes vorgesehen sind, so daß Einrichtungen zur Feineinstellung nicht mehr benötigt werden.

Aus der DE-A-3 607 329 ist eine Steuereinrichtung für ein Schaltgetriebe mit Steuerventilen, die als magnetische Schalt- und Druckregelventile ausgebildlet wurden, bekanntgeworden, wobei die Regelung der Magnetkraft mit Hilfe analoger, hardwareverschalteter Regler erfolgte.

Aufgabe der Erfindung ist es somit, einen digitalen Zweipunktregler und ein Verfahren zur digitalen Zweipunktregelung anzugeben, mit dem die zuvor geschilderten Nachteile des Standes der Technik überwunden werden. Insbesondere soll erreicht werden, daß durch Einsatz des digitalen Zweipunktreglers der bislang notwendige manuelle Abgleich entfallen kann und die Ansteuerung von mehreren Ventilen mit ein und derselben Anordnung möglich ist.

Die Aufgabe wird gemäß der Erfindung durch einen digitalen Zweipunktregler nach einem der Ansprüche 1 bis 3 und ein Verfahren zur digitalen Zweipunktregelung nach einem der Ansprüche 1 bis 5 gelöst.

Weiterbildungen der Erfindung sind Gegenstand der Unteransprüche. Die Gegenstände der unabhängigen Ansprüche 1 bis 3 sind gleichberechtigte Lösungen der oben definierten Aufgabe.

Gemäß dem Verfahren nach Anspruch 1 ist der digitale Zweipunktregler derart ausgebildet, daß ein in die Speichereinrichtung eingelesener digitaler Istwert mit dem darin abgelegten Sollwert verglichen wird und dieser Vergleich Ausgangspunkt für die nachfolgenden Schritte ist. In einer anderen Lösung gemäß Anspruch 2 wird der digitale Istwert vom digitalen Sollwert subtrahiert und je nach Vorzeichen dieser Differenz die nachfolgenden Verfahrensschritte ausgeführt. Gemäß einer weiteren Lösung der Erfindung wie in Anspruch 3 offenbart, wird zum digitalen Sollwert ein für diesen Regler charakteristischer digitaler Hysteresewert hinzuaddiert und auf diese Art und Weise die Hysterese des Zweipunktreglers eingestellt.

Mit Vorteil ist vorgesehen, daß die Abtastzeit des digitalen Zweipunktreglers im Bereich von 0,1 Millisekunde bis 10 Millisekunden liegt, besonders vorteilhaft ist es, mit einem Abtastintervall von einer Millisekunde zu arbeiten. Das Abtastintervall von ungefähr einer Millisekunde erlaubt es, daß der digitale Zweipunktregler die Regelung des Aktuators in einer ausreichend kurzen Zeit realisiert. Bei sehr schwachem Meßsignal kann vorgesehen sein, dieses analoge Signal mit Hilfe einer Verstärkerschaltung für die Steuereinrichtung aufzubereiten. In einer besonders bevorzugten Ausführungsform ist vorgesehen, als Aktuator mittels des erfindungsgemäßen digitalen Zweipunktreglers eine Magnetspule eines Magnetventils zu betätigen. Hierbei findet in einer Ausführungsform der Erfindung der digitale Zweipunktregler bei der elektrohydraulischen Steuerung eines Getriebes mittels von Magnetventilen Verwendung, wobei dieses Getriebe bevorzugt ein Differentialwandlergetriebe (DIWA-Getriebe) ist.

Neben den zuvor ausgeführten Vorrichtungen eines digitalen Zweipunktreglers stellt die Erfindung auch mehrere Verfahren zur digitalen Zweipunktregelung für ein Aktuatorelement zur Verfügung.

Bei dem ersten erfindungsgemäßen Verfahren handelt es sich um eine Zweipunktregelung, bei der ein digitaler Istwert mit einem digitalen Sollwert verglichen wird. In einer zweiten Ausführungsform kann vorgesehen sein, daß eine Differenz zwischen digitalem Ist- und Sollwert gebildet wird und die Regelung mit Hilfe dieses Differenzsignals erfolgt. In einem dritten Verfahren wird eine mögliche Hysterese des Zweipunktreglers berücksichtigt.

Nachfolgend soll die Erfindung anhand von Ausführungsbeispielen und den Figuren näher beschrieben werden.

Es zeigen:
- Fig. 1: ein erfindungsgemäßer digitaler Zweipunktregler für ein Magnetventil;
- Fig. 2: das Flußdiagramm eines erfindungsgemäßen digitalen Zweipunktreglers, der nach der Vergleichsmethode arbeitet;
- Fig. 3: das Flußdiagramm für das Regelungsprogramm eines Magnetventiles mit einem Hysteresebeitrag;
- Fig. 4: Schaltungsaufbau eines Zweipunktreglers gemäß dem Stand der Technik.

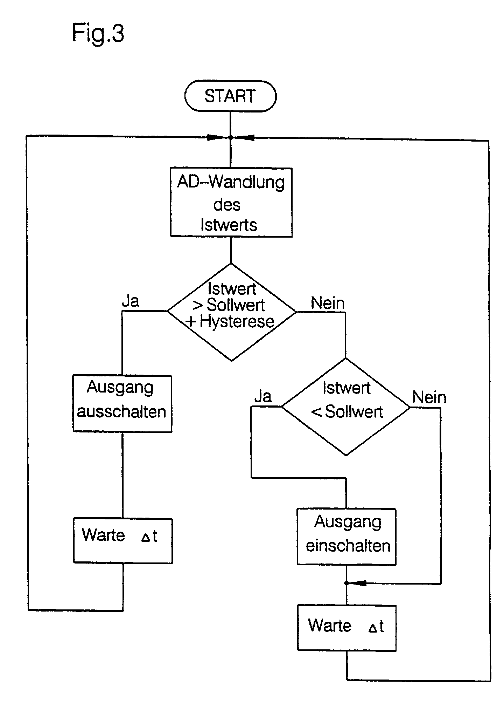

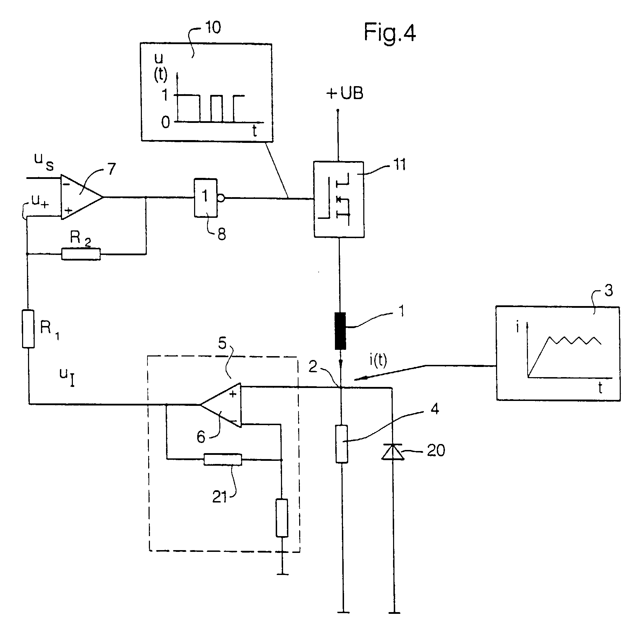

In Fig. 4 ist die Schaltung für einen Zweipunktregler für die Magnetspule 1 eines nicht dargestellten Magnetventiles gezeigt. Der Verlauf des Meßsignales i(t) im Punkt 2 ist in Abbildung 3 dargestellt. Vorliegend wird als Meßsignal der Strom i(t) durch die Magnetspule 1 aufgenommen. Das Meßsignal i(t) fällt über einem Meßwiderstand 4 als Spannung ab und wird in einer Verstärkerschaltung 5, umfassend einen Operationsverstärker 6, auf einen Spannungswert U_{I}, der vorzugsweise zwischen 0 und 5 Volt liegt, verstärkt. Am positiven Eingang des Komparators 7 liegt gemäß der dargestellten Schaltung eine Spannung U₊ an, die dem Istwert U_{I} minus dem über dem Widerstand R1 abgefallenen Spannungswert entspricht. Der dem positiven Eingang des Operationsverstärkers 7 vorangestellte Widerstand R1 bestimmt ebenso wie der Widerstand R2, der zwischen dem positiven Eingang und dem Ausgang des Operationsverstärkers geschaltet ist, die Hysterese des dargestellten Reglers. Im als Komparator 7 geschalteten Operationsverstärker wird der Spannungswert U+ mit dem Sollspannungswert Us, der vorzugsweise ebenfalls zwischen 0 und 5 Volt liegt, verglichen und aus dem Vergleich der analogen Signale ein binäres Signal erhalten, das eine logische 1 (EINS) bzw. 0 (NULL) darstellt. Das binäre Signal wird einem Inverter 8 zugeführt, so daß ein invertiertes Spannungssignal gemäß Darstellung 10 am Ausgang des Inverters anliegt. Das Ausgangssignal 10 des Inverters treibt einen Ausgangstreiber 11, der mit einer Spannung +U_{B} versorgt wird. Der Ausgangstreiber 11 treibt die zu regelnde Magnetspule 1. Gemäß dem Stand der Technik muß der Hystereswert des Reglers durch die Widerstände R1 und R2 eingestellt werden, sowie die gesamte dargestellte Reglerschaltung für das jeweilige Getriebe, indem das Magnetventil Verwendung findet, abgestimmt werden muß.

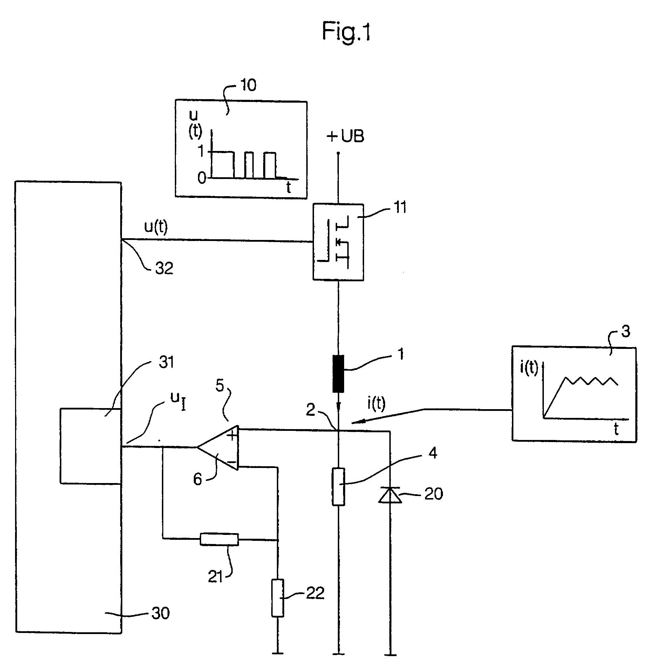

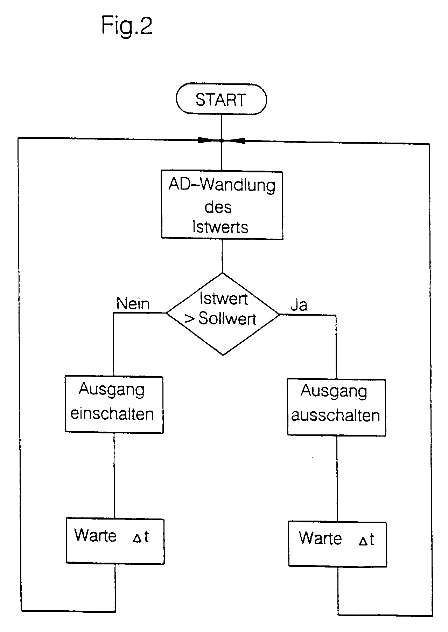

In Fig. 1 ist die Verschaltung des erfindungsgemäßen digitalen Zweipunktreglers dargestellt. Wie bei dem Zweipunktregler nach dem Stand der Technik wird durch die in Fig. 1 dargestellte erfindungsgemäße Regelanordnung eine Magnetspule eines Magnetventils geregelt. Selbstverständlich ist es denkbar, anstelle der Magnetspule auch andere Betätigungselemente in Abhängigkeit von einem Sollwert mit der dargestellten Schaltung gemäß Fig. 1 zu steuern. Das Meßsignal der Magnetspule ist wiederum der Strom i(t) im Punkt 2 der Schaltung, der über einen Meßwiderstand 4 in einen Spannungswert gewandelt wird. Die Schaltung umfasst eine Löschdiode 20. Das Meßsignal wird in einer Verstärkerschaltung 5, umfassend mindestens einen Operationsverstärker 6 und Widerstände 21, 22, verstärkt und als analoger Istwert U_{I} der Steuereinrichtung 30, die in vorliegendem Fall ein Mikrocomputer ist, zugeführt. Das analoge Spannungssignal wird durch einen A/D-Wandler 31 von einem analogen in ein digitales Signal gewandelt und einem digitalen Speicherbereich der Steuereinrichtung 30 abgelegt. Der digitale Istwert wird dann in einer ersten Ausführungsform gemäß einem Flußdiagramm nach Fig. 2 mit einem in einem zweiten Bereich der Speichereinrichtung abgelegten Sollwert verglichen. Ist der Sollwert größer oder gleich dem in der Steuereinrichtung gespeicherten Sollwert, so wird der Ausgang 32 der Steuereinrichtung ausgeschaltet, d.h. auf eine logische NULL gesetzt. Ist hingegen der Istwert kleiner als der Sollwert, so wird der Ausgang 32 eingeschaltet, d.h. auf eine logische EINS gesetzt. Das Einlesen eines neuen Istwertes über den A/D-Wandler, an dem ständig ein analoges Signal anliegt, wird nach einer Abtastzeit Δt durchgeführt und der zuvor aufgestellte Vergleich von digitalem Ist- und Sollwert erneut vorgenommen. In der Summe resultiert am Ausgang 32 der in der Abbildung 10 dargestellte Spannungsverlauf. Als Abtastintervall kann entsprechend dem Einsatzfall des Reglers eine Abtastzeit von 0,1 Millisekunde bis 10 Millisekunden gewählt werden. Als besonders geeignet für eine schnelle und zufriedenstellende Regelung hat sich ein Abtastintervall von einer Millisekunde herausgestellt. Vorteilhafterweise kann das Einlesen von Istwerten in den A/D-Wandler zum Umsetzen von einem analogen in einen digitalen Wert mit Hilfe eines zyklisch aufgerufenen Interrupts erfolgen.

Das ausgangsseitige Signal U(t) treibt wie bei der Ausführung gemäß Fig. 4 einen Ausgangstreiber 11, der mit der Magnetspule 1 verbunden ist.

Selbstverständlich ist es möglich, auch andere Regelungskonzepte in Mikrocomputer 30 zu realisieren. Beispielsweise ist es denkbar, daß statt eines direkten Vergleiches von digitalem Soll- und Istwert zunächst die Differenz hieraus gebildet wird und eine Ein- bzw. Ausschaltung des Ausgangs 32 je nach dem erfolgt, ob die Differenz größer oder kleiner null ist. Durch die Ausführung eines Zweipunktreglers in digitaler Form ist es auf sehr einfache Art und Weise möglich, den Regler zu normieren. Dies geschieht dadurch, daß nicht der sich sehr schnell ändernde Istwert der zu regelnden Größe, die vorliegend die Magnetkraft ist, normiert wird, sondern der Sollwert, der sich wesentlich langsamer ändert. Im vorliegenden Fall ändert sich der Sollwert maximal alle 10 Millisekunden.

In einer Fortbildung der Erfindung ist es gemäß dem Schaubild nach Fig. 3 auch möglich, die für den stabilen Betrieb eines Zweipunktreglers nötige Hysterese variabel einzustellen. Im Gegensatz zu der fest verdrahteten Schaltung gemäß Fig. 4 geschieht dies erfindungsgemäß nicht mehr dadurch, daß feste Widerstände in die Schaltung eingelötet werden, sondern ein Hysteresewert in einem dritten Bereich der Steuereinrichtung abgelegt wird. Der Ablauf und die Steuerung des Ausgangs 32 der Steuereinrichtung erfolgt wie nachstehend beschrieben. Ist der von einem analogen Wert U_{I} in einen digitalen Wert gewandelte Istwert größer oder gleich einem Summenwert aus einem in einem zweiten Bereich der Steuereinrichtung abgelegten Sollwert und einem in einem dritten Bereich abgelegten Hysteresewert, so wird der Ausgang 32 ausgeschaltet, d.h. auf eine logische NULL gesetzt. Ist dies nicht der Fall, so wird in einer weiteren Abfrage geprüft, ob der digitale Istwert kleiner als der digitale Sollwert ist. Ist dies der Fall, so wird der Ausgang 32 eingeschaltet, d.h. ausgangsseitig eine logische EINS ausgegeben. Ist der digitale Istwert größer oder gleich dem digitalen Sollwert, so wird der Ausgang im Zustand wie vor dem Eingeben des Istwertes in den Computer belassen. Nach einer Abtastzeit Δt wird ein neuer Wert in die Steuereinrichtung eingelesen und die zuvor dargestellten Abfragen erneut durchgeführt. Entsprechend dem Abfrageergebnis wird dann der Ausgang entweder ausgeschaltet, eingeschaltet oder in dem Zustand belassen, in dem er sich vor Einlesen des Wertes befand.

Mit der vorliegenden Erfindung ist es somit erstmals möglich, einen Aktuator, der vorzugsweise ein Magnetventil für eine Getriebesteuerung sein kann, digital zu regeln. Dies hat zum Vorteil, daß ein wesentlich einfacherer Schaltungsaufbau realisiert werden kann und der Regler an verschiedene Betriebszustände leicht anzupassen ist.

## Patentansprüche

1. Verfahren zur digitalen Zweipunktregelung eines Magnetventiles mit Magnetspule einer elektro-hydraulisches Steuerung eines Getriebes wobei als analoges Meßsignal für das Magnetventil der Strom durch die Magnetspule aufgenommen wird,
1.1 das analoge Strommeßsignal des Magnetventils wird in einem A/D-Wandler in ein digitales Istwert-Signal gewandelt,
1.2 der digitale Istwert wird in einen ersten Bereich eines Speichers einer Steuereinrichtung eingelesen,
1.3 der in den ersten Bereich des Speichers eingelesene digitale Istwert wird mit einem in einem zweiten Bereich des Speichers abgelegten digitalen Sollwert für das Magnetventil verglichen,
1.4 der Ausgang der Steuereinrichtung zu einem Ausgangstreiber für das Magnetventil wird auf NULL gesetzt, wenn der digitale Istwert größer oder gleich dem digitalen Sollwert ist; und
1.5 der Ausgang der Steuereinrichtung zum Ausgangstreiber wird auf EINS gesetzt, wenn der digitale Istwert kleiner als der digitale Sollwert ist; und
1.6 nach einer Abtastzeit Δt wird erneut ein analoges Meßsignal vom Magnetventil aufgenommen und die Schritte 1.1 bis 1.5 in einem dem Abtastintervall entsprechenden zyklisch aufgerufenen Interrupt erneut ausgeführt.

2. Verfahren zur digitalen Zweipunktregelung eines Magnetventiles mit Magnetspule einer elektro-hydraulischen Steuerung eines Getriebes, wobei als analoges Meßsignal für das Magnetventil der Strom durch die Magnetspule aufgenommen wird,
2.1 das analoge Strommeßsignal des Magnetventils wird in einem A/D-Wandler in ein digitales Istwert-Signal gewandelt,
2.2 der digitale Istwert wird in einen ersten Bereich des Speichers einer Steuereinrichtung eingelesen,
2.3 die Differenz zwischen dem in den ersten Bereich des Speichers eingelesenen digitalen Istwert und einem in einem zweiten Bereich des Speichers abgelegten digitalen Sollwert wird für das Magnetventil gebildet,
2.4 der Ausgang der Steuereinrichtung zu einem Ausgangstreiber für das Aktuatorelement auf NULL gesetzt wird, wenn die in Schritt 2.3 gebildete Differenz größer oder gleich Null ist, und
2.5 der Ausgang der Steuereinrichtung zum Ausgangstreiber wird auf EINS gesetzt, wenn der in Schritt 2.3 gebildete Differenzwert kleiner als Null ist, und
2.6 nach einer Abtastzeit Δt wird erneut ein analoges Meßsignal vom Magnetventil aufgenommen und die Schritte 2.1 bis 2.5 in einem dem Abtastintervall entsprechenden zyklisch aufgerufenen Interrupt erneut ausgeführt.

3. Verfahren zur digitalen Zweipunktregelung eines Magnetventiles mit einer Magnetspule einer elektro-hydraulischen Steuerung eines Getriebes, wobei als analoges Meßsignal für das Magnetventil der Strom durch die Magnetspule aufgenommen wird,
3.1 das analoge Strommeßsignal des Magnetventiles wird in einem A/D-Wandler in ein digitales Istwert-Signal gewandelt
3.2 der digitale Istwert wird in einen ersten Bereich eines Speichers einer Steuereinrichtung eingelesen,
3.3 der in den ersten Bereich des Speichers eingelesene digitale Istwert wird mit einem in einem zweiten Bereich des Speichers abgelegten digitalen Summenwert aus digitalem Sollwert für das Magnetventil und einem einstellbaren digitalen Hysteresewert für das Magnetventil verglichen,
3.4 der Ausgang der Steuereinrichtung zum Ausgangstreiber wird auf NULL gesetzt, wenn der digitale Istwert größer oder gleich dem digitalen Summenwert ist; und
3.5 wenn der digitale Istwert kleiner als der digitale Summenwert ist, wird der digitale Istwert mit einem in einem dritten Bereich der Speichereinrichtung abgelegten digitalen Sollwert für das Magnetventil verglichen, und
3.5.1 der Ausgang der Steuereinrichtung zum Ausgangstreiber wird auf EINS gesetzt, wenn der digitale Istwert kleiner als der digitale Sollwert des Magnetventiles ist,
3.5.2 ein Setzen des Ausgangs zum Ausgangstreiber erfolgt nicht, wenn der digitale Istwert größer oder gleich dem digitalen Sollwert ist, und
3.6 nach einer Abtastzeit Δt wird erneut ein analoges Meßsignal vom Magnetventil aufgenommen und die Schritte 3.1 bis 3.5 in einem dem Abtastintervall entsprechenden zyklisch aufgerufenen Interrupt erneut ausgeführt.

4. Verfahren zur digitalen Zweipunktregelung nach einem der vorangegangenen Ansprüche 1 bis 3, dadurch gekennzeichnet,
daß die Abtastzeit im Bereich 0,1 Millisekunden bis 10 Millisekunden liegt.

5. Verfahren zur digitalen Zweipunktregelung nach einem der Ansprüche 1 bis 3, dadurch gekennzeichnet,
daß die Abtastzeit bei 1 Millisekunde liegt.

## Claims

1. Method for the digital two-step control of a solenoid valve with a solenoid of an electrohydraulic control of a transmission, wherein as an analogue measuring signal for the solenoid valve the current is accepted by the solenoid,
1.1 the analogue current measuring signal of the solenoid valve is converted in an A/D converter into a digital actual value signal,
1.2 the digital actual value is entered into a first area of a memory of a control device,
1.3 the digital actual value entered into the first area of the memory is compared with a digital desired value for the solenoid valve stored in a second area of the memory,
1.4 the output of the control device to an output driver for the solenoid valve is set to ZERO, when the digital actual value is greater or equal to the digital desired value; and
1.5 the output of the control device to the output driver is set to ONE, when the digital actual value is smaller than the digital desired value; and
1.6 after a scanning time Δt again an analogue measuring signal is accepted by the solenoid valve and steps 1.1 to 1.5 are repeated in an cyclically called interrupt corresponding to the scanning interval.

2. Method for the digital two-step control of a solenoid valve with solenoid of an electrohydraulic control of a transmission, wherein as an analogue measuring signal for the solenoid valve the current is accepted by the solenoid,
2.1 the analogue current measuring signal of the solenoid valve is converted in an A/D converter into a digital actual value signal,
2.2 the digital actual value is entered into a first area of the memory of a control device,
2.3 the difference between the digital actual value entered into the first area of the memory and a digital desired value stored in a second area of the memory is formed for the solenoid valve,
2.4 the output of the control device to an output driver for the actuator element is set to ZERO, when the difference formed in step 2.3 is greater or equal to zero, and
2.5 the output of the control device to the output driver is set to ONE, when the difference formed in step 2.3 is less than zero, and
2.6 after a scanning time Δt again an analogue measuring signal is accepted by the solenoid valve and steps 2.1 to 2.5 are repeated in an cyclically called interrupt corresponding to the scanning interval.

3. Method for the digital two-step control of a solenoid valve with a solenoid of an electrohydraulic control of a transmission, wherein as an analogue measuring signal for the solenoid valve the current is accepted by the solenoid,
3.1 the analogue current measuring signal of the solenoid valve is converted in an A/D converter into a digital actual value signal,
3.2 the digital actual value is entered into a first area of a memory of a control device,
3.3 the digital actual value entered into the first area of the memory is compared with a digital sum of the digital desired value for the solenoid valve and an adjustable digital hysteresis value for the solenoid valve stored in a second area of the memory,
3.4 the output of the control device to the output driver is set to ZERO, when the digital actual value is greater or equal to the digital sum; and
3.5 when the digital actual value is smaller than the digital sum the digital actual value is compared with a digital desired value for the solenoid valve stored in a third area of the memory device, and
3.5.1 the output of the control device to the output driver is set to ONE, when the digital actual value is smaller than the digital desired value of the solenoid valve,
3.5.2 a setting of the output to the output driver is not performed when the digital actual value is greater than or equal to the digital desired value, and
3.6 after a scanning time Δt again an analogue measuring signal is accepted by the solenoid valve and steps 3.1 to 3.5 are repeated in an cyclically called interrupt corresponding to the scanning interval.

4. Method for digital two-step control according to one of the preceding claims 1 to 3, characterised in that the scanning time is in the range of 0.1 milliseconds to 10 milliseconds.

5. Method for digital two-step control according to one of claims 1 to 3, characterised in that the scanning time is 1 millisecond.

## Revendications

1. Procédé de régulation numérique, à deux positions, d'une vanne magnétique avec une bobine magnétique, d'une commande électro-hydraulique d'un mécanisme, le signal de mesure analogique relevé pour la vanne magnétique étant le courant traversant la bobine magnétique,
1.1 le signal de mesure de courant analogique de la vanne magnétique étant transformé en un signal de valeur réelle numérique dans un convertisseur A/N,
1.2 la valeur réelle numérique étant lue dans une première zone d'une mémoire d'un dispositif de commande,
1.3 la valeur réelle numérique lue dans la première zone de la mémoire étant comparée à une valeur de consigne numérique pour la vanne magnétique déposée dans une deuxième zone de la mémoire,
1.4 la sortie du dispositif de commande qui mène à un excitateur de sortie pour la vanne magnétique étant mise à zéro quand la valeur réelle numérique est supérieure ou égale à la valeur de consigne numérique, et
1.5 la sortie du dispositif de commande qui mène à l'excitateur de sortie étant mise à un quand la valeur réelle numérique est inférieure à la valeur de consigne numérique ; et
1.6 après une période de détection Δt, un nouveau signal de mesure analogique étant relevé depuis la vanne magnétique et les étapes 1.1 à 1.5 étant répétées dans une interruption appelée d'une manière cyclique correspondant à l'intervalle de détection.

2. Procédé de régulation numérique, à deux positions, d'une vanne magnétique avec une bobine magnétique, d'une commande électro-hydraulique d'un mécanisme, le signal de mesure analogique relevé pour la vanne magnétique étant le courant traversant la bobine magnétique,
2.1 le signal de mesure de courant analogique de la vanne magnétique étant transformé en un signal de valeur réelle numérique dans un convertisseur A/N,
2.2 la valeur réelle numérique étant lue dans une première zone d'une mémoire d'un dispositif de commande,
2.3 la différence entre la valeur réelle numérique lue dans la première zone de la mémoire et une valeur de consigne numérique déposée dans une deuxième zone de la mémoire étant formée pour la vanne magnétique,
2.4 la sortie du dispositif de commande qui mène à un excitateur de sortie pour l'élément actionneur étant mise à zéro quand la différence formée en 2.3 est supérieure ou égale à zéro, et
2.5 la sortie du dispositif de commande qui mène à l'excitateur de sortie étant mise à un quand la différence formée en 2.3 est inférieure à zéro ; et
2.6 après une période de détection Δt, un nouveau signal de mesure analogique étant relevé depuis la vanne magnétique et les étapes 2.1 à 2.5 étant répétées dans une interruption appelée d'une manière cyclique correspondant à l'intervalle de détection.

3. Procédé de régulation numérique à deux positions, d'une vanne magnétique avec une bobine magnétique, d'une commande électro-hydraulique d'un mécanisme, le signal de mesure analogique relevé pour la vanne magnétique étant le courant traversant la bobine magnétique,
3.1 le signal de mesure de courant analogique de la vanne magnétique étant transformé en un signal de valeur réelle numérique dans un convertisseur A/N,
3.2 la valeur réelle numérique étant lue dans une première zone d'une mémoire d'un dispositif de commande,
3.3 la valeur réelle numérique lue dans la première zone de la mémoire étant comparée à une somme numérique pour la vanne magnétique déposée dans une deuxième zone de la mémoire et à une valeur d'hystérèse numérique réglable pour la vanne magnétique,
3.4 la sortie du dispositif de commande qui mène à l'excitateur de sortie étant mise à zéro quand la valeur réelle numérique est supérieure ou égale à la somme numérique, et
3.5 quand la valeur réelle numérique est inférieure à la somme numérique, la valeur réelle numérique est comparée à une valeur de consigne numérique pour la vanne magnétique déposée dans une troisième zone de la mémoire, et
3.5.1 la sortie du dispositif de commande qui mène à l'excitateur de sortie est mise à un quand la valeur réelle numérique est inférieure à la valeur de consigne numérique de la vanne magnétique,
3.5.2 la sortie menant à l'excitateur de sortie n'est pas activée quand la valeur réelle numérique est supérieure ou égale à la valeur de consigne numérique, et
3.6 après une période de détection Δt, un nouveau signal de mesure analogique étant relevé depuis la vanne magnétique et les étapes 3.1 à 3.5 étant répétées dans une interruption appelée d'une manière cyclique correspondant à l'intervalle de détection.

4. Procédé de régulation numérique à deux positions selon l'une des revendications précédentes 1 à 3, caractérisé en ce que la durée de détection est située dans le domaine de 0,1 milliseconde à 10 millisecondes.

5. Procédé de régulation numérique à deux positions selon l'une des revendications 1 à 3, caractérisé en ce que la durée de détection est de l'ordre de 1 milliseconde.
